# EUROPEAN PATENT APPLICATION

(11) **EP 0 653 452 A1**
(43) Date of publication of application: **17.05.1995**
(21) Application number: 94203207.9
(22) Date of filing: 03.11.1994
(51) Int. Cl.: C08G 81/02, C08C 19/44

(54) **Method for preparing asymmetric radial copolymers**

(30) Priority: 09.11.1993 US 149598
(71) Applicant: SHELL INTERNATIONALE RESEARCH MAATSCHAPPIJ B.V., NL-2596 HR Den Haag (NL)
(72) Inventor: Chin, Steven Soohyun, Houston, Texas 77095 (US); Hoxmeier, Ronald James, Houston, Texas 77082 (US); Spence, Bridget Ann, Houston, Texas 77098 (US)

(57) **Abstract**

A method for preparing asymmetric radial polymers wherein the different polymeric arms are contacted sequentially with a coupling agent. The method narrows the relative arm distribution of the specifically selected asymmetric radial polymers produced and significantly increases the amount of tailor made final product, having the desired ratio of polymeric arms. Coupling agents having six functional chlorine groups are to be used for the preparation of said asymmetric radial polymers, containing four arms of one type and two arms of another type.

## Description

This invention relates to a method for preparing polymers. More particularly, this invention relates to a method for preparing asymmetric radial polymers of a tailor made specifically selected molecular structure.

Heretofore, several methods have been proposed for preparing asymmetric radial polymers. As is well known in the prior art, radial polymers comprise three or more arms extending outwardly from a nucleus. The asymmetric radial polymers, generally, contain arms of at least two different polymers, which polymers may vary as to chemical composition, structure and/or molecular weights. Asymmetric radial polymers having arms of different molecular weights are sometimes referred to as polymodal polymers. A principal difference in the methods frequently used to prepare both asymmetric and polymodal radial polymers resides in the selection of a coupling agent which forms the nucleus of the radial polymer. The coupling agent may contain a fixed, though sometimes variable, number of functional sites such as the coupling agents taught in U.S. Patent Nos. 3,281,383; 3,598,884; 3,639,517; 3,646,161; 3,993,613 and 4,086,298 or the coupling agent may itself be a monomer which polymerizes during the coupling reaction such as taught in U.S. Patent No. 3,985,830.

From European Patent Application No. 0314,256 has become known in general the preparation of asymmetrical radial copolymers, containing a significantly higher amount of the desired compound having the actual specific molecular structure, at the cost of earlier coproduced other accompanying molecular structures, by applying an alternative way of reacting the previously prepared individual living polymer arms with the polyfunctional coupling agent having from three to twelve functional groups.

A similar process was known from European Patent Application no. 0 540,109 A1, actually disclosing a method for preparing an asymmetric radial polymer, comprising subsequently reacting of living polymers, having a single reactive group and being different from each other, with a polyfunctional coupling agent, wherein the last polymer chain to be reacted with the coupling agent is contacted with the prereacted coupling agent in the presence of a polar compound, capable of modifying the amount of vinyl groups in poly(conjugated diene) polymers. In particular the preparation of asymmetric radial copolymers was disclosed, originating from the use of coupling agents having 3 or 6 functional groups.

Although the products obtainable by the generally disclosed process of said European patent applications, were found to have narrower distributions of relative arm content, leading to better performance in many end use applications, an important disadvantage of said process was the additional costs due to the multi stages and expenditure of additional reactors.

On the other hand there was still a need for further improvement of the properties of asymmetric copolymers for specific end uses by further "fine tuning" the manufacturing conditions, i.e. a balanced selection of specific living polymer arms (molecular weight microstructure), their mutuaol ratio to be coupled, the coupling sequence and the type of coupling agent to be used.

It is therefore an object of the present invention to provide an improved process for preparing tailor made asymmetrical radial polymers, wherein the relative distribution of arms within the polymer is controlled within a narrower range. It is another object of the present invention to provide asymmetrical radial polymers, having improved properties due to the tailor made structure and the narrower distribution of arms within these polymers especially in adhesive compositions.

As result of extensive research and experimentation such a process and the asymmetrical radial polymers aimed at, could be surprisingly found.

Accordingly one aspect of the invention is relating to a method for preparing an asymmetric radial polymer comprising the steps of
(a) contacting a first conjugated diene polymer having a single reactive end group per molecule with a coupling agent containing six functional halogen groups which will react with the reactive end group such that said first conjugated diene polymer reacts with four of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an assymmetric radial polymer having at least 75% by weight of six arm radial polymer molecules having a ratio of four polymeric arms from the first conjugated diene polymer to two polymeric arms from the second conjugated diene polymer.

Suitable coupling agents to be used according to the process of the present invention include X₃Si-SiX, X₃Si-O-SiX₃, X₃Si-(CH₂)ₚ-SiX₃ wherein each X may, independently be fluorine, chlorine, bromine, iodine or alkoxy having 1 to 4 carbon atoms and preferably 1 and wherein p = 1 - 6..

According to preferred embodiment, the applied coupling agent is containing six chlorine functional groups and more preferably it is selected from Cl₃Si-SiCl₃, Cl₃Si-O-SiCl₃ or Cl₃Si-(CH₂)ₚ-SiCl₃ wherein p = 1-6 and preferably 1 or 2 and most preferably 2.

The most preferred coupling agent is 1,2 bis(trichlorosilyl)ethane.

The method is particularly suitable for the preparation of asymmetric radial polymers from so-called "living" polymers containing a single terminal metal ion. The coupling agent used in the preparation must, then, contain four functional groups which will react with the polymer at the site of the metal ion. As is well known in the prior art, "living" polymers are polymers containing at least one active group such as a metal atom bonded directly to a carbon atom. "Living" polymers are readily prepared via anionic polymerization. Since the present invention is particularly well suited to the preparation of asymmetric radial polymers using "living" polymers to form the arms thereof, the invention will be described by reference to such polymers. It will, however, be appreciated that the invention would be equally useful with polymers having different reactive groups so long as the selected coupling agent contains functional groups which are reactive with the reactive site contained in the polymer.

Living polymers containing a single terminal group are, of course, well known in the prior art. Methods for preparing such polymers are taught, for example, in U.S. Patent Nos. 3,150,209; 3,496,154; 3,498,960; 4,145,298 and 4,238,292. In general, the polymers produced with the processes taught in the foregoing patents maybe polymers of one or more conjugated dienes containing from 4 to 12 carbon atoms such as 1,3-butadiene, isoprene, piperylene, methylpentadiene, phenylbutadiene, 3,4-dimethyl-1,3-hexadiene or 4,5-diethyl-1,3-octadiene, preferably those conjugated diolefins containing 4 to 8 carbon atoms. In accordance with the disclosure of at least certain of these patents, one or more of the hydrogen atoms in the conjugated diolefins may be substituted with halogen. The polymers produced by these processes may also be copolymers of one or more of the aforementioned conjugated diolefins and one or more other monomers, particularly monoalkenyl aromatic hydrocarbon monomers such as styrene, various alkyl-substituted styrenes, alkoxy-substituted styrene, vinyl naphthalene or vinyl toluene. Homopoymers and copolymers of monoalkenyl aromatic hydrocarbons can also be prepared by the method disclosed in the aforementioned patents, particularly the methods taught in U.S. Patent Nos. 3,150,209; 3,496,154; 3,498,960; 4,145,298 and 4,238,202. When the polymer product is a random or tapered copolymer, the monomers are, generally, added at the same time, although the faster reacting monomer may be added slowly in some cases, while, when the product is a block copolymer, the monomer used to form the separate blocks are added sequentially.

In general, the polymers useful as arms in both the method of this invention and the asymmetric radial polymer of this invention may be prepared by contacting the monomer or monomers with an organoalkali metal compound in a suitable solvent at a temperature within the range from about -150°C to about 300°C, preferably at a temperature within the range from about 0°C to about 100°C. Particularly effective polymerization initiators are organolithium compounds having the general formula:

RLi,

wherein:
R is an aliphatic, cycloaliphatic, alkyl-substituted cycloaliphatic, aromatic or alkyl-substituted aromatic hydrocarbon radial having from 1 to about 20 carbon atoms and preferably a tert-butyl or sec-butyl group.

Preferably the first conjugated diene polymer comprises living polyisoprene homopolymer and the second conjugated diene polymer comprises living poly(styrene)-poly(isoprene) or living poly(styrene)-poly (butadiene) diblock copolymers.

More preferably the living isoprene homopolymers have weight average molecular weights of from 1000 to 150,0000, while the living block copolymers have weight average molecular weights from 1000 to 150,000.

It will be appreciated that another aspect of the present invention is formed by an asymmetric radial polymer, obtainable by a method comprising the steps of:
(a) contacting a first conjugated diene polymer having a single reactive end group per molecule with a coupling agent containing four functional halogen groups which will react with the reactive end group such that said first conjugated diene polymer reacts with two of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an asymmetric radial polymer having four-arm radial polymer molecules having a ratio of two polymeric arms from the first conjugated diene polymer to two polymeric arms from the second conjugated diene polymer;
and by their derivatives wherein the original ethylenic unsaturation has been selectively, partially or completely hydrogenated, i.e. up to a residual ethylenic unsaturation of from 50 to 0.5% and a residual aromatic unsaturation of 90% or more.

Preferred asymmetric radial polymers are those, wherein the first conjugated diene polymer arm comprises polyisoprene homopolymer and wherein the second conjugated diene polymer arm comprises poly(styrene)-poly(isoprene) or poly(styrene)-poly(butadiene) diblock copolymers.

More preferred asymmetric radial polymers are those, wherein the poly(isoprene) arms have weight average molecular weights from 1000 to 150,000 and most preferably from 4,000 to 30,000, while the block copolymers arms have weight average molecular weights of the polystyrene blocks from 5000 to 100,000, and preferably from 6,000 to 15,000, and the weight average molecular weight of the poly(conjugated diene) block is in the range of from 15,000 to 150,000 and preferably from 17,000 to 25,000.

The living polymers used as arms in the asymmetric radial polymer will be contacted with the coupling agent at a temperature within the range from 0°C to 100°C and more preferably from 50°C to 80°C, at a pressure within the range of from 1 bar (0 psig) to 8 bar (100 psig) and the contacting in each step will be maintained until reaction between the arms and the coupling agent is complete, generally for a period of time with in the range from 1 to 1000 minutes and preferably from 30 to 80 minutes.

While the inventor does not wish to be bound by any particular theory, it is believed that the method of this invention results in an improved relative arm distribution because the reactivity of the functional groups contained in the coupling agent become progressively less active as the number of functional groups contained in the coupling agent is reduced as the result of reaction with the metal-carbon bond contained in the living polymer. Further, it is believed that this reduction in activity is caused primarily by steric hindrance resulting from the progressive incorporation of polymer segments onto the coupling agent. The last functional site remaining on the coupling agent would, then, be the least reactive no matter how many functional groups the coupling agent initially contained. As a result, when only a portion of the total number of arms to be contained in the asymmetric radial polymer is initially contacted with the coupling agent, the arms would have readier access to the more reactive functional groups and would, then, react predominantly at these groups. Similarly, the next portion of arms contacted with the partially reacted coupling agent would again be more likely to react with the more reactive of the remaining functional groups until such time as all of the functional groups were reacted. This difference in reactivity, then, when coupled with sequential addition of the different arms greatly enhances the probability that each asymmetric radial polymer formed will have the desired number of each arm.

In general the polymers useful as arms in the asymmetric radial polymers of the present invention will be in solution, when contacted with the coupling agent. Suitable solvents include those useful in the solution polymerization of the polymer and include aliphatic, cycloaliphatic, alkyl-substituted cycloaliphatic, aromatic and alkyl-substituted aromatic hydrocarbons, ethers and mixtures thereof. Suitable solvents, then, include aliphatic hydrocarbons such as butane, pentane, hexane or heptane, cycloaliphatic hydrocarbons such as cyclohexane, cyclopentane or cycloheptane, alkyl-substituted cycloaliphatic hydrocarbons such as methylcyclohexane, methylcycloheptane, aromatic hydrocarbons such as benzene, and alkyl-substituted aromatic hydrocarbons such as toluene or xylene, and ethers such as tetrahydrofuran, diethylether or di-n-butyl ether. Since the polymers useful in making the asymmetric radial polymers of this invention will contain a single terminal reactive group, the polymers used in the preparation of the asymmetric radial polymers will retained in solution after preparation without deactivating the reactive (living) site. In general, the coupling agent may be added to a solution of the polymer or a solution of the polymer may be added to the coupling agent.

Ether such as glyme, diethylether, dimethoxybenzene or tetramethylene ehtylenediamine are added before the second coupling step to accelerate the reaction between the last halogen on each silicon and the terminal functional group on the second polymeric arms.

Another aspect of the present invention is formed by the selectively hydrogenated derivatives of the asymmetric radial polymers as specified hereinbefore, obtainable by partial or complete selective hydrogenation of the original ethylenic unsaturation, originating from the poly(conjugated diene) blocks by methods generally known in the art.

E.g. such selective hydrogenation can be obtained by means of a nickel-aluminium catalyst or a dicylcopentadienyl-titanium complex catalyst.

The asymmetrical radial polymers of the present invention may above used in any of the applications for which asymmetric radial polymers, having the same average relative arm structure, can be used.

Special end use applications include the applications in adhesives, sealants and coatings and in particular mixed with suitably selected other tackifying resins and/or other auxiliaries; the use as viscosity index improvers, the use for impact modification of engineering thermoplastics, and the use in asphalt modification.

The invention is illustrated by the following examples, however without restricting its scope to these specific embodiments.

### Example 1

In this example, an asymmetric radial polymer, containing four homopolymer arms and two block copolymer arm, was prepared. The homopolymer arm was a polyisoprene having a weight-average molecular weight of 29,000 g/mole. The block copolymer was a block copolymer comprising a single polystyrene block having a weight-average molecular weight of 10,600 and a single polyisoprene block having a weight-average molecular weight of 19,100. In the first step of the preparation, a sufficient amount of a living polyisoprene polymer to provide four moles of living polymer per mole of 1,2 bis(trichlorosilyl)ethane was contacted with 1,2 bis(trichlorosilyl)ethane at a temperature of 60°C and at ambient pressure. The living polymer was dissolved in cyclohexane at a concentration of 15 wt% of polyisoprene and the contacting was accomplished by adding the 1,2 bis(trichlorosilyl)ethane to the polymer solution. The contacting was maintained for 75 minutes with mild agitation.

After reaction of the living polyisoprene polymer and the coupling agent was complete, a sufficient amount of a living styrene-isoprene block copolymer was added to the solution to provide two moles of block copolymer per mole of bis(trichlorosilyl)ethane initially in solution, along with 300 ppm ortho-dimethoxybenzene on a total solution basis. Contacting between the block copolymer and the reaction product from the first step was continued for 3 hours at the same conditions used during the first contacting step except that the temperature was 70°C..

After reaction of the block copolymer and the coupling agent was completed, the asymmetric radial polymer was recovered and analyzed to determine the polymer composition. The results obtained for the radial polymer components are summarized in Table 1.

**TABLE 1**

| Number of Homopolymer Arms | % of Six-Arm Radial Polymer With # of Homopolymer Arms Indicated | |
|---|---|---|
| | Method of this Invention | Prior Art Method |
| 0 | 0 | <1 |
| 1 | 0 | 1.6 |
| 2 | 0 | 8 |
| 3 | 0 | 22 |
| 4 | 100 | 33 |
| 5 | 0 | 26 |
| 6 | 0 | 9 |

From the data summarized in the preceding Table, the method of this invention results in a polymer composition containing six-arm radial polymers having exclusively the desired 4:2 arm ratio. No other six-arm asymmetric radial polymers are produced. Preparation of a similar polymer by the prior art method should result in a distribution of six-arm radial polymer components containing about 33% of the desired 4:2 asymmetric radial copolymer. The method of the present invention is, then, very effective in producing a precisely controlled asymmetric radial polymer.

### Example 2

In this example, an asymmetric radial polymer containing four homopolymer arms and two block copolymer arms was prepared according to the procedure of Example 1, with the following changes. The homopolymer arm was a polyisoprene having a weight-average molecular weight of 16,000. The block copolymer comprised a single polystyrene block having a weight-average molecular weight of 15,000 and a single polyisoprene block having a weight-average molecular weight of 23,000. The first coupling step was run at 60°C for 60 minutes. The second coupling step was run at 70°C for 24 hours in the presence of 300 ppm glyme on a total solution basis. After preparation of the asymmetric radial polymer, it was analyzed to determine the polymer composition. The results obtained are summarized in Table 2 for comparison of linear and radial components with other six arm radial polymers.

### Example 3

In this example, an asymmetric radial polymer containing four homopolymer arms and two block copolymer arms was prepared according to the procedure of Example 1, with the following changes. The homopolymer arm was a polyisoprene having a weight-average molecular weight of 3,800. The block copolymer comprised a single polystyrene block having a weight-average molecular weight of 6000 and a single polybutadiene block having a weight-average molecular weight of 23,400. The first coupling step was run at 65°C for 30 minutes. The second coupling step was run at 65°C for 60 minutes in the presence of 300 ppm glyme on a total solution basis. After preparation of the asymmetric radial polymer, it was analyzed to determine the polymer composition. The results obtained are summarized in Table 2.

### Example 4

In this example, an asymmetric radial polymer containing four homopolymer arms and two block copolymer arms was prepared according to the procedure of Example 1. The homopolymer arm was a polyisoprene having a weight-average molecular weight of 3,800. The block copolymer comprised a single polystyrene block having a weight-average molecular weight of 6,000 and a single polyisoprene block having a weight-average molecular weight of 23,500. The first coupling step was run at 65°C for 30 minutes. The second coupling step was run at 60°C for 60 minutes in the presence of 300 ppm glyme on a total solution basis. After preparation of the asymmetric radial polymer, it was analyzed to determine the polymer composition. The results obtained are summarized in Table 2.

**Table 2**

| **Composition of Six-Arm Asymmetric Radial Polymers Prepared Using the Method of This Invention** ^{**a**} | | | | |
|---|---|---|---|---|
| Example Number | %wt 6-arm asymmetric radial polymer ^{b} | %wt 5-arm asymmetric radial polymer ^{c} | %wt diblock copolymer | % wt homopolymer |
| 2 | 83.6 | 0 | 14.9 | 1.5 |
| 3 | 85.5 | 10.8 | 1.8 | 3.4 |
| 4 | 79 | 17.5 | 0 | 0 |
| 5 | 77 | 18.9 | 0 | 0 |

| | | | | |
|---|---|---|---|---|
| a. Determined by Gel Permeation Chromatography. | | | | |
| b. All asymmetric radial polymer which is obtained by coupling of two block copolymer arms and four homopolymer arms. | | | | |
| c. All asymmetric radial polymer which is obtained by coupling of one block copolymer arm and four homopolymer arms. | | | | |

From the data summarized in the preceding Table, the method of this invention results in a polymer composition containing almost exclusively the desired six-arm asymmetric radial polymer. Some five-arm radial polymer was produced indicating that the copolymer arms reacted to completion prior to reaction with all chlorine atoms on the coupling agent. The presence of linear diblock results from an excess of the copolymer arms. Both five-arm radial polymers and linear diblock polymers are produced in the prior art method when the amount of reagents is not carefully controlled.

## Claims

1. A method for preparing an asymmetric radial polymer comprising the steps of:
(a) contacting a first conjugated diene polymer having a single reactive end group per molecule with a coupling agent containing six functional groups which will react with the reactive end group such that said first conjugated diene polymer reacts with four of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an asymmetric radial polymer having at least 75% by weight of six-arm radial polymer molecules having a ratio of four polymeric arms from the first conjugated diene polymer to two polymeric arms from the second conjugated diene polymer.

2. The method of Claim 1 wherein the first conjugated diene polymer comprises living isoprene homopolymer and the second conjugated diene polymer comprises living poly(styrene)-poly(isoprene) or poly(styrene)-poly(butadiene) diblock copolymers.

3. The method of claims 1 and 2, wherein said coupling agents comprises six functional halogen groups.

4. The method of Claims 1-3 wherein said coupling agent contains six functional chlorine groups.

5. The method of Claim 4 wherein said coupling agent is Cl₃Si-(CH₂)₂-SiCl₃.

6. The method of Claims 1-5 wherein the living isoprene homopolymers have weight average molecular weights from 4,000 to 30,000, the living block copolymers have weight average molecular weights of the poly(styrene) blocks of from 6,000 to 15,000 and weight average molecular weights of the polyisoprene or poly(butadiene) blocks in the range of from 17,000 to 25,000.

7. An asymmetric radial polymer obtainable by a method comprising the steps of:
(a) contacting a first conjugated diene polymer having a single reactive end group per molecule with a coupling agent containing six functional groups which will react with the reactive end group such that said first conjugated diene polymer reacts with four of the functional groups on each molecule of the coupling agent;
(b) contacting a second conjugated diene polymer having a single reactive end group per molecule with the reaction product from step (a) under conditions such that reaction between said block polymer and the reaction product from step (a) proceeds substantially to completion; and
(c) recovering an asymmetric radial polymer having at least 75% by weight of six-arm radial polymer molecules having a ratio of four polymeric arms from the first conjugated diene polymer to two polymeric arms from the second conjugated diene polymer, and their derivatives wherein the original ethylenic unsaturation has selectively been partially or completely hydrogenated.

8. The asymmetric radial polymer of Claim 7 wherein the first conjugated diene polymer comprises living isoprene homopolymer and the second conjugated diene polymer comprises living poly(styrene)-poly(isoprene) diblock copolymers or polystyrene-poly(butadiene) diblock copolymers.

9. The asymmetric radial polymer of Claims 7 and 8, wherein the living isoprene homopolymers have weight average molecular weights from 4,000 to 30,000, the living block copolymers have weight average molecular weights of the poly(styrene) blocks of from 6,000 to 15,000 and weight average molecular weights of the poly(isoprene) or poly(butadiene) blocks in the range of from 17,000 to 25,000.
